# EUROPÄISCHE PATENTSCHRIFT

(11) **EP 1 327 072 B1**
(45) Veröffentlichungstag und Bekanntmachung des Hinweises auf die Patenterteilung: **28.04.2004**
(21) Anmeldenummer: 01978193.9
(22) Anmeldetag: 28.09.2001
(51) Int. Cl.: F02P 15/08, F02P 5/152, F02D 41/34

(54) **VERFAHREN ZUR KLOPFREGELUNG**
METHOD FOR REGULATING KNOCKING
PROCEDE DE REGULATION DU CLIQUETIS

(30) Priorität: 07.10.2000 DE 10049653
(43) Veröffentlichungstag der Anmeldung: 16.07.2003
(73) Patentinhaber: ROBERT BOSCH GMBH, 70442 Stuttgart (DE)
(72) Erfinder: SAULER, Jürgen, 70192 Stuttgart (DE); TORNO, Oskar, 71701 Schwieberdingen (DE); HEINSTEIN, Axel, 71229 Wimsheim (DE); KLUTH, Carsten, 70469 Stuttgart (DE); HAEMING, Werner, 74861 Neudenau (DE)
(86) Internationale Anmeldenummer: PCT/DE2001/003743
(87) Internationale Veröffentlichungsnummer: WO 2002/031356

(56) Entgegenhaltungen:
- DE-A- 19 547 167
- US-A- 5 027 775
- US-A- 6 062 199
- PATENT ABSTRACTS OF JAPAN vol. 007, no. 250 (M-254), 8. November 1983 (1983-11-08) & JP 58 135365 A (TOYOTA JIDOSHA KOGYO KK), 11. August 1983 (1983-08-11)

## Beschreibung

### Stand der Technik

Die Erfindung betrifft ein Verfahren zur Klopfregelung von Mehrzylinder-Brennkraftmaschinen mit 2n Zylindern, wobei mindestens einer der Zylinder bei Aktivierung einer Leitzylinderfunktion als Leitzylinder für einen als zu führend deklarierten Zylinder fungieren kann, mit einem Zylinderzähler, mit mindestens einem Klopfsensor und mit einer Auswerteeinrichtung zur Auswertung der Klopfsensor-Signale der einzelnen Zylinder.

Die Auswertung der Klopfsensor-Signale erfolgt in der Regel mit Hilfe von individuellen Klopferkennungs-Kennlinien für jeden Zylinder.

Unter Klopfen versteht man eine unkontrollierte Form der Verbrennung, die zu Motorschäden führen kann. Aus diesem Grund wird der Zündwinkel in der Regel immer mit einem Sicherheitsabstand zur Klopfgrenze gewählt. Andererseits ist bekannt, dass eine Brennkraftmaschine möglichst dicht an der Klopfgrenze betrieben werden sollte, um ein optimales Drehmoment zu erzielen. Das Einhalten eines Sicherheitsabstands des Zündwinkels zur Klopfgrenze ist also mit einem erhöhten Kraftstoffverbrauch verbunden. Die Klopfgrenze ist von verschiedenen Faktoren beim Betrieb einer Brennkraftmaschine abhängig, wie der Kraftstoffqualität, dem Motorzustand und den Umweltbedingungen. Um den Sicherheitsabstand möglichst klein wählen zu können, den Zündwinkel also möglichst dicht an die aktuelle Klopfgrenze heranlegen zu können, muß die jeweils aktuelle Klopfgrenze zunächst bestimmt werden. Dabei kommen in der Praxis Klopfsensoren zum Ei nsatz, wie z.B. Körperschallsensoren oder Brennraumdrucksensoren.

Das Klopfsensor-Signal wird für jeden Zylinder einzeln ausgewertet. Die dafür erforderliche Zuordnung des aktuellen Klopfsensor-Signafs zu einem bestimmten Zylinder erfolgt mit Hilfe des Zylinderzählers im Rahmen einer Phasenerkennung, bei der die Zustände der einzelnen Zylinder während des Betriebs der Brennkraftmaschine erfasst werden. Unter gewissen Umständen kann bei Ausfall der Phasenerkennung nicht mehr bestimmt werden, ob das Klopfsensor-Signal ausgewertet wird, das dem dem Zylinderzählerstand entsprechenden Zylinder oder dem um 360° versetzt laufenden Zylinder zuzuordnen ist. Dieser Fall wird als Klopfregelungs(KR)-Notlauf bezeichnet.

In der Praxis wird bei KR-Notlauf die von allen Zylindern der Brennkraftmaschine am empfindlichsten ausgelegte Klopferkennungsschwelle ausgewählt und der Zündwinkelregelung aller Zylinder zu Grunde gelegt. Die Auswahl der entsprechenden Klopferkennungs-Kennlinie muss dann bei jeder Änderung der Klopferkennungsschwellen überprüft werden, um unerkannte Klopfer und damit Motorschädigungen zu vermeiden.

Unabhängig vom KR-Notlauf kann der Fall eintreten, dass ab einer bestimmten Drehzahl bei einzelnen Zylindern keine sichere Klopferkennung mehr möglich ist. In diesem Fall wird der betroffene Zylinder als zu führend deklariert und die sogenannte Leitzylinderfunktion aktiviert. Dadurch werden dem zu führenden Zylinder ein oder auch mehrere Leitzylinder zugeordnet. Der zu führende Zylinder wird dann mit der Zündwinkelspätverstellung des oder der Leitzylinder betrieben und ggf. mit einem zusätzlichen Offset behaftet. Lässt sich einem betroffenen Zylinder kein Leitzylinder zuordnen, so wird für diesen Zylinder der späteste Zündwinkel der restlichen Zylinder verwendet. Auch in diesem Fall kann der Zündwinkel mit einem zusätzlichen Offset beaufschlagt werden.

In der Praxis kann der Fall eintreten, dass die Leitzylinderfunktion bei KR-Notlauf aktiviert wird. In diesem Fall wird die sogenannte Sicherheitsspätverstellung ausgelöst, bei der ein vorab für alle Zylinder festgesetzter Zündwinkel eingestellt wird. Das daraus resultierende nach spät Verstellen der Zündwinkel verursacht einen hohen Drehmomentverlust.

Der nächstkommende Stand der Technik ist durch US 502 7775 wiedergegeben.

### Vorteile der Erfindung

Mit der vorliegenden Erfindung wird ein Verfahren zur Klopfregelung bei KR-Notlauf und aktivierter Leitzylinderfunktion zur Verfügung gestellt, mit dem sich bei geringem Applikationsaufwand ein Drehmomentverlust vermeiden lässt und die durch die Leitzylinderfunktion gewünschte Funktionalität auch bei KR-Notlauf erhalten bleibt.

Dies wird erfindungsgemäß dadurch erreicht, dass bei KR-Notlauf und bei aktivierter Leitzylinderfunktion
- aus den um jeweils 360° versetzt laufenden Zylindern Zylinderpärchen gebildet werden,
- jedem Zylinderpärchen mit mindestens einem zu führenden Zylinder mindestens einer der zur Verfügung stehenden Leitzylinder zugeordnet wird, so dass der Zündwinkelspätverstellung des zu führenden Zylinderpärchens die Zündwinkelspätverstellung des zugeordneten Leitzylinders zu Grunde gelegt wird,
- und nur dann eine Sicherheitsspätverstellung ausgelöst wird, bei der ein vorab für alle Zylinder festgesetzter Zündwinkel eingestellt wird, wenn keine hinreichend große Anzahl von Leitzylindern zur Verfügung steht.

Erfindungsgemäß werden eine Klopfregelung bzw. Zündwinkelregelung bei KR-Notlauf und eine Klopfregelung bzw. Zündwinkelregelung mit Leitzylinderfunktion so miteinander verknüpft, dass die Zündwinkelregelung in Abhängigkeit vom Zustand des jeweiligen Zylinders erfolgt. Bei der erfindungsgemäßen Klopfregelung wird nämlich sowohl berücksichtigt, ob ein Zylinder vom Ausfall der Phasenerkennung betroffen ist, als auch, ob für einen Zylinder bei gegebener Drehzahl noch eine sichere Klopferkennung möglich ist. Dazu werden die Zylinder der Brennkraftmaschine erfindungsgemäß zu Zylinderpärchen zusammengefasst. Die Zündwinkel der Zylinder eines zu führenden Zylinderpärchens werden bei KR-Notlauf einheitlich geregelt. Im Vergleich zu einer Sicherheitsspätverstellung für alle Zylinder ermöglicht die erfindungsgemäße Bildung von Zylinderpärchen und die erfindungsgemäße paarweise Regelung frühere Zündwinkel für zumindest einen Teil der Zylinder der Brennkraftmaschine, so dass sich ein Drehmomentgewinn erzielen lässt.

Werden dem zu führenden Zylinderpärchen mehrere Leitzylinder zugeordnet, so lässt sich der größte Drehmomentgewinn dadurch erzielen, dass jeweils das Minimum der Zündwinkelspätverstellungen aller Leitzylinder des zu führenden Zylinderpärchens bestimmt wird und der Zündwinkelspätverstellung des zu führenden Zylinderpärchens dieses Minimum der Zündwinkelspätverstellungen zu Grunde gelegt wird.

Aus Gründen der Applikationssicherheit ist es vorteilhaft, wenn das zu führende Zylinderpärchen mit der Zündwinkelspätverstellung des Leitzylinders bzw. dem Minimum der Zündwinkelspätverstellungen aller zugeordneten Leitzylinder plus einem applizierbaren Offset betrieben wird.

### Zeichnung

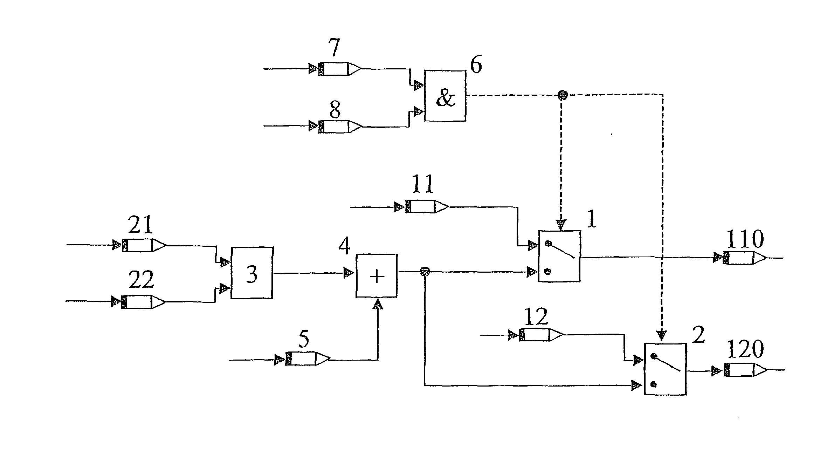

Grundsätzlich gibt es verschiedene Möglichkeiten, die Lehre der vorliegenden Erfindung in vorteilhafter Weise auszugestalten und weiterzubilden. Zur Erläuterung wird auf die nachfolgende Beschreibung des erfindungsgemäßen Verfahrens an Hand der Zeichnung verwiesen.

Die einzige Figur zeigt eine Schaltungslogik zur Realisierung des erfindungsgemäßen Verfahrens für einen 4-Zylinder-Motor.

### Beschreibung eines Ausführungsbeispiels

Mit 11 und 12 sind die Zündwinkelspätverstellungssignale zweier Zylinder eines 4-Zylinder-Motors bezeichnet, die um 360° versetzt laufen und bei KR-Notlauf zu einem ersten Zylinderpärchen zusammengefasst werden. Die Zündwinkelspätverstellungssignale der anderen beiden Zylinder des 4-Zylinder-Motors sind mit 21 und 22 bezeichnet. Diese anderen beiden Zylinder bilden bei KR-Notlauf ein zweites Zylinderpärchen.

Im hier dargestellten Fall liegt nicht nur KR-Notlauf vor. Daneben ist ab einer bestimmten Drehzahl für mindestens einen der beiden Zylinder des ersten Zylinderpärchens auch keine sichere Klopferkennung mehr möglich. Deshalb wird das erste Zylinderpärchen als zu führend deklariert. Im vorliegenden Fall werden dem ersten Zylinderpärchen bei Aktivierung der Leitzylinderfunktion beide Zylinder des zweiten Zylinderpärchens als Leitzylinder zugeordnet.

Zur Ermittlung der jeweiligen Zündwinkelspätverstellung für das erste Zylinderpärchen wird mit Hilfe eines Schaltungselements 3 jeweils das Minimum der Zündwinkelspätverstellungssignale 21 und 22 des zweiten Zylinderpärchens bestimmt. Auf dieses Minimum wird mit Hilfe eines Summationselements 4 ein Sicherheits-Offset 5 aufaddiert. Das Ergebnis wird einem Schalter 1 zugeführt, an dem auch das Zündwinkelspätverstellungssignal 11 eines Zylinders des ersten Zylinderpärchens anliegt. Das Ergebnis wird außerdem einem Schalter 2 zugeführt, an dem auch das Zündwinkelspätverstellungssignal 12 des anderen Zylinders des ersten Zylinderpärchens anliegt.

Wenn an den entsprechenden Eingängen eines logischen UND-Verknüpfungselements 6 zum einen die Bedingung für KR-Notlauf 7 und zum anderen auch die Bedingung für Leitzylinderfunktion 8 anliegen, dann werden die Schalter 1 und 2 betätigt, so dass als Zündwinkelspätverstellungssignale 110 und 120 der Zylinder des zu führenden Zylinderpärchens das Minimum der Zündwinkelspätverstellungssignale 21 und 22 des zweiten Zylinderpärchens plus dem aufaddierten Sicherheits-Offset 5 verwendet wird. Durch diese Minimalauswahl wird der späteste Zündwinkel für die geführten Zylinder verwendet.

## Patentansprüche

1. Verfahren zur Klopfregelung von Mehrzylinder-Brennkraftmaschin en
- mit 2n Zylindern, wobei mindestens einer der Zylinder bei Aktivierung einer Leitzylinderfunktion als Leitzylinder für einen als zu führend deklarierten Zylinder fungieren kann,
- mit einem Zylinderzähler,
- mit mindestens einem Klopfsensor und
- mit einer Auswerteeinrichtung zur Auswertung der Klopfsensor-Signale der einzelnen Zylinder,
**dadurch gekennzeichnet, dass** bei Klopfregelungs(KR)-Notlauf, und zwar bei Ausfall der Phasenerkennung, wenn die Auswerteeinrichtung nicht erkennen kann, ob das Klopfsensor-Signal dem dem Zylinderzählerstand entsprechenden Zylinder oder dem um 360° versetzt laufenden Zylinder zuzuordnen ist, und bei aktivierter Leitzylinderfunktion
- aus den um jeweils 360° versetzt laufenden Zylindern Zylinderpärchen gebildet werden,
- jedem Zylinderpärchen mit mindestens einem zu führenden Zylinder mindestens einer der zur Verfügung stehenden Leitzylinder zugeordnet wird, so dass der Zündwinkelspätverstellung des zu führenden Zylinderpärchens die Zündwinkelspätverstellung des zugeordneten Leitzylinders zu Grunde gelegt wird,
- und nur dann eine Sicherheitsspätverstellung ausgelöst wird, bei der ein vorab für alle Zylinder festgesetzter Zündwinkel eingestellt wird, wenn keine hinreichend große Anzahl von Leitzylindern zur Verfügung steht.

2. Verfahren nach Anspruch 1, wobei dem zu führenden Zylinderpärchen mehrere Leitzylinder zugeordnet sind, **dadurch gekennzeichnet, dass** jeweils das Minimum der Zündwinkelspätverstellungen aller Leitzylinder des zu führenden Zylinderpärchens bestimmt wird und der Zündwinkelspätverstellung des zu führenden Zylinderpärchens dieses Minimum der Zündwinkelspätverstellungen zu Grunde gelegt wird.

3. Verfahren nach einem der Ansprüche 1 oder 2, **dadurch gekennzeichnet, dass** das zu führende Zylinderpärchen mit der Zündwinkelspätverstellung des Leitzylinders bzw. dem Minimum der Zündwinkelspätverstellungen aller zugeordneten Leitzylinder plus einem applizierbaren Offset betrieben wird.

## Claims

1. Method for knock control in multi-cylinder internal combustion engines,
- with 2n cylinders, in which case, in the event of activation of a master-cylinder function, at least one of the cylinders can function as master cylinder for a cylinder declared as a slave cylinder,
- with a cylinder counter,
- with at least one knock sensor, and
- with an evaluation device for evaluating the knock-sensor signals of the individual cylinders,
**characterized in that**, in the event of knock-control (KC) emergency operation, namely in the event of the failure of phase detection, when the evaluation device cannot detect whether the knock-sensor signal is assigned to the cylinder corresponding to the cylinder counter state or to the cylinder running with an offset of 360°, and in the case of an activated master-cylinder function,
- cylinder subpairs are formed from the cylinders running in each case with an offset of 360°,
- each cylinder subpair with at least one slave cylinder is assigned at least one of the available master cylinders, so that the ignition-angle retard of the slave-cylinder subpair is based on the ignition-angle retard of the assigned master cylinder,
- and a safety retard, in which an ignition angle previously fixed for all the cylinders is set, is triggered only when there is insufficient master cylinders.

2. Method according to Claim 1, a plurality of master cylinders being assigned to the slave-cylinder subpair, **characterized in that**, in each case, the minimum of the ignition-angle retards of all the master cylinders of the slave-cylinder subpair is determined, and the ignition-angle retard of the slave-cylinder subpair is based on this minimum of the ignition-angle retards.

3. Method according to one of Claims 1 or 2, **characterized in that** the slave-cylinder subpair is operated with the ignition-angle retard of the master cylinder or with the minimum of the ignition-angle retards of all the assigned master cylinders, plus an applicable offset.

## Revendications

1. Procédé pour la régulation du cliquetis de moteurs à combustion interne de plusieurs cylindres comprenant :
- 2n cylindres, dans lequel, en cas d'activation d'une fonction de cylindre menant, au moins un des cylindres peut jouer le rôle de cylindre menant pour un cylindre déclaré à diriger,
- un compteur de cylindres,
- au moins un détecteur de cliquetis et
- un dispositif d'analyse destiné à analyser les signaux de détecteur de cliquetis des cylindres individuels,
**caractérisé en ce qu'**
en présence d'un mode de détresse de la régulation du cliquetis (KR) et, plus précisément en l'absence de reconnaissance de la phase, si le dispositif d'analyse ne peut pas reconnaître si le signal de détecteur de cliquetis doit être associé au cylindre qui correspond à l'état du compteur de cylindres ou au cylindre qui travaille avec décalage de 360 °, et si la fonction de cylindre menant est activée,
- des paires élémentaires de cylindres sont formées à partir des cylindres qui marchent avec décalage de 360°,
- au moins un des cylindres menants disponibles est associé à chaque paire élémentaire de cylindres comprenant au moins un cylindre mené, de sorte que, pour le retardement de l'angle d'allumage de la paire élémentaire de cylindres menés, on prend pour base le retardement de l'angle d'allumage du cylindre menant qui lui est associé,
- et un retardement de sécurité dans lequel est établi un angle d'allumage fixé au préalable pour tous les cylindres n'est déclenché que si l'on ne dispose pas d'un assez grand nombre de cylindres menants.

2. Procédé selon la revendication 1, dans lequel plusieurs cylindres menants sont associés à la paire élémentaire de cylindres menés,
**caractérisé en ce que**
le minimum des retardements de l'angle d'allumage de tous les cylindres menants de la paire élémentaire de cylindres menés est déterminé à chaque fois et ce minimum des retardements des angles d'allumage est pris pour base pour le retardement de l'angle d'allumage de la paire élémentaire de cylindres menés

3. Procédé selon une des revendications 1 ou 2,
**caractérisé en ce que**
la paire élémentaire de cylindres menés travaille avec le retardement de l'angle d'allumage du cylindre menant ou avec le minimum des retardements de l'angle d'allumage de tous les cylindres menants associés, plus un décalage applicable.
